# EUROPEAN PATENT APPLICATION

(11) **EP 4 516 105 A2**
(43) Date of publication of application: **05.03.2025**
(21) Application number: 25153095.2
(22) Date of filing: 21.12.2018
(51) Int. Cl.: A01P 13/00

(54) **HERBICIDE**

(62) Divisional of application: 18839610.5
(71) Applicant: UPL Limited, Mumbai, 400051 (IN)
(72) Inventor: HELLER, Jean-Jacques, 92400 Courbevoie (FR); POLLET, Jean-Philippe, Warrington, WA3 6YN (GB); REYER, William, Warrington, WA3 6YN (GB); SHROFF, Jaidev Rajnikant, Dubai (AE); SHROFF, Vikram Rajnikant, Dubai (AE)
(74) Representative: J A Kemp LLP

(57) **Abstract**

The invention relates to the selective control of weeds in crops such as cereal crops, and specifically to the use of a herbicide composition at a locus for growing a cereal crop in order to selectively control a weed at that locus. The herbicide composition used in the invention is as defined herein.

## Description

### FIELD OF THE INVENTION

The invention relates to the selective control of weeds in crops such as cereal crops. Specifically, the invention relates to the use of a herbicide at a locus for growing a cereal crop in order to selectively control a weed at that locus. The invention also relates to methods for selectively controlling the growth of a weed at a locus for growing a cereal crop by using a herbicide. The invention further relates to a locus for growing a cereal crop to which a selective herbicide has been applied. The herbicide used in the invention is napropamide.

### BACKGROUND OF THE INVENTION

Selective control of weeds in commercial crops such as cereal crops is a key challenge facing modem agriculture. Weeds typically compete with crops such as cereal crops for nutrients, water, light and space, and thus failure to control the presence of weeds in crops can decrease crop yields. Weeds can also be hosts of pests and diseases which if transferred to the crop can again reduce crop yields. Furthermore, weed seeds may inadvertently be harvested together with the desired crop, which can necessitate the harvested crop being further treated or processed or even, in extreme cases, discarded completely. There is therefore a clear need for effective herbicides capable of controlling the growth of weeds to prevent contamination of crops such as cereal crops.

Many herbicides have been developed to control the growth of unwanted plants such as weeds. A number of such herbicides have been described previously as being effective as controlling all plant material in which they come into contact with. Such herbicides include paraquat, glufosinate, glyphosate, and the like. However, these herbicides are non-selective and thus cannot be used to selectively control the growth of weeds in crops such as cereal crops, as the effect of such herbicides is to kill or damage the crop in addition to the weed. To overcome this difficulty, it is therefore necessary to use selective herbicides capable of controlling weed growth whilst sparing the crop.

A known herbicide is napropamide, also know as N,N-diethyl-2-(α-naphthoxy) propionamide. Napropamide is generally marketed under the trade name Devrinol. The structure of napropamide is shown in Formula (1) below.

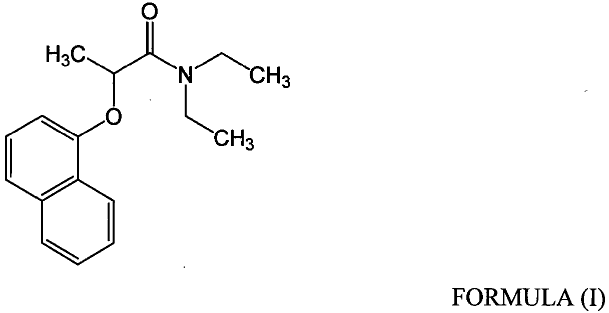

Napropamide contains a chiral carbon atom and hence napropamide exists in two stereoisomeric forms, one form being the D isomer, also known as the (R) isomer, and the other form being the L isomer, also known as the (S) isomer. The D-isomer, D-napropamide, is also referred to as napropamide-M, and its structure is shown in Formula (II):

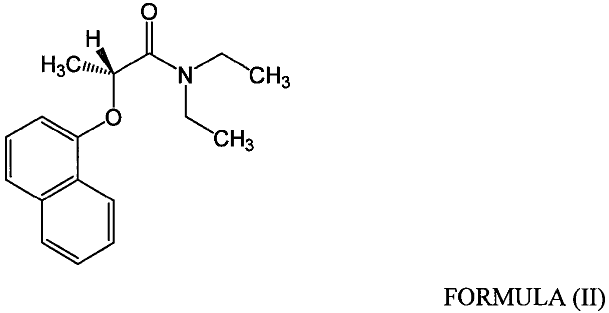

Napropamide-M can be prepared by any suitable method known in the art, such as those methods disclosed in WO 2009/004642.

Unless otherwise stated, and as discussed further below, the term "napropamide" as used herein refers to N,N-diethyl-2-(α-naphthoxy) propionamide or an isomer thereof, or a mixture of such isomers. Accordingly, unless otherwise stated or otherwise clear from the context, the term napropamide may refer to a mixture of D-napropamide and L-napropamide. The mixture may for example be a racemic mixture (i.e. a 1:1 mixture of D-napropamide and L-napropamide). The term napropamide also embraces pure isomers of N,N-diethyl-2-(α-naphthoxy) propionamide including for example D-napropamide.

Napropamide has previously been shown to have application in the selective control of dicotyledonous weds. For example, EP 277 397 A1 describes how napropamide can be used to selectively target dicotyledonous weeds in crops such as oilseed rape, strawberries, blackcurrants, goosebernes, raspberries, field trees, shrubs, broccoli, cabbage, calabrese, cauliflower, kale and Brussels sprouts. However, EP 277 397 A1 explains that napropamide has low activity in controlling monocotyledonous weeds in such crops. EP 277 397 A1 also is silent regarding the selective control of weeds in a monocotyledonous crop such as a cereal crop. There therefore remains a pressing need for methods of controlling weeds such as monocotyledonous weeds in crops, especially in cereal crops.

### SUMMARY OF THE INVENTION

The present inventors have surprisingly found that napropamide selectively controls the growth of weeds such as monocotyledonous weeds in cereal crops. As described in more detail here, the inventors have shown that when napropamide is applied to monocotyledonous cereal crops, the cereal crop itself is selectively spared whilst weeds, including common, grass-type weeds, are selectively targeted. This finding is particularly surprising in view of the fact that both cereal crops and grass-type weeds are monocotyledonous. Thus, not only was it was surprising that napropamide could be used as a herbicide in cereal crops safely, i.e. without destroying the crop itself, it was particularly surprising that napropamide could at the same time control the growth of grass-type weeds. Like cereals, such weeds are monocotyledonous, and finding a herbicide that demonstrates selectivity between different classes of monocotyledonous plant is not an easy exercise because such selectivity cannot be predicted. It was therefore unexpected that napropamide is able to control one class of monocotyledonous plant, namely grass-type weeds, yet at the same time spare another class of monocotyledonous plant, cereal crops.

The invention therefore provides the use of napropamide for selective control of a weed at a locus for growing a cereal crop; wherein the cereal crop is present at the locus or is planted at the locus after application of said napropamide to the locus.

The invention also provides a method of selectively controlling a weed at a locus for growing a cereal crop, said method comprising application of napropamide to the locus, wherein a cereal crop is present at the locus or is planted at the locus after application of said napropamide to the locus.

Further provided is a locus for growing a cereal crop, wherein a weed and a cereal crop are both present at the locus and the locus has a herbicide for selective control of the weed applied thereto, wherein said herbicide consists of or comprises napropamide.

### BRIEF DESCRIPTION OF THE FIGURES

Figure 1 shows normalised plant growth following application of herbicides as described in Example 1.
Figure 2 shows further normalised plant growth following application of herbicides as described in Example 1.

### DETAILED DESCRIPTION OF THE INVENTION

As explained above, the invention provides the use of napropamide for selective control of a weed at a locus for growing a cereal crop; wherein the cereal crop is present at the locus or is planted at the locus after application of said napropamide to the locus.

The term "selective control" means that the herbicide is capable of controlling the growth of one species of plant whilst allowing the growth of another. Thus, the selective control of a weed means that the growth of the weed is controlled whilst the growth of other non-weed plants such as cereal crops is not controlled or is controlled to a significantly lesser extent than the growth of the weed. Typically, controlling the growth of a weed involves preventing the germination, rooting or growth of the weed plant. Often, controlling the growth of the weed involves retarding or stopping the rate of growth of the weed plant. Controlling the growth of a weed may involve preventing or retarding root development. Controlling the growth of a weed may involve inhibiting cell division thereby preventing development of roots or foliage, particularly of roots. Controlling the growth of a weed may involve preventing, inhibiting or retarding germination of a seed of the weed. By controlling the growth of a weed the growth following application of the herbicide may reduced relative to that of the weed in the absence of the herbicide. Often, the growth of the weed following application of the herbicide is suppressed by at least 50%, e.g. at least 60%, such as at least 70%, more often at least 80% e.g. at least 90%, for example at least 95% such as at least 97%, at least 98%, or at least 99% that of the weed in the absence of the herbicide. In the invention, the herbicide is napropamide. The napropamide is as defined herein, and as described in more detail below may be administered as a pure substance or in the form of a composition comprising one or more further components such as one or more agrochemically acceptable excipient, diluent, adjuvant and/or safener; and/or together with an additional active agent, e.g. ethofumesate, flufenacet and/or pendimethalin.

Accordingly, selective control of a weed at a locus for growing a cereal crop typically involves preventing the germination, rooting or growth of the weed plant whilst not preventing the germination, rooting or growth of the cereal crop. For example, the growth of the cereal crop following application of the herbicide may be at least 50% that of the cereal crop in the absence of the herbicide. More often, the growth of the cereal crop following application of the herbicide may be at least 60%, such as at least 70%, more often at least 80% e.g. at least 90%, for example at least 95% such as at least 97%, at least 98%, at least 99% or even 100% that of the cereal crop in the absence of the herbicide. Most typically, the application of the herbicide has no significant effect on the growth of the cereal crop whilst significantly controlling the growth of the weed.

In the invention, the locus for growing a cereal crop is the vicinity of the crop in which selective control of a weed is required. In the invention, the locus may be may, for example, a container such as a pot or grow-bag, a garden bed or a field. Usually in the invention a locus is a field. The locus is any location at which a cereal crop has been planted or will be planted after application of the herbicide. The locus is the area in which weed growth has occurred or would be expected to occur in the absence of the application of the herbicide.

In the invention, the cereal crop planted or to be planted at the locus can be any cereal crop. In the invention, the term "crop" typically relates to a multitude of desired crop plants, *i.e.* cereal plants, growing at the locus, but may also refer to just one desired crop plant, i.e. one cereal plant, growing at the locus. The term "crop" thus embraces plants wherein the target portion of the plant (e.g. the seed) has already developed, or wherein the target portion of the plant has not yet developed, for example in young or immature plants.

As those skilled in the art will appreciate, cereal crops are generally monocotyledonous species. Typically, therefore, the cereal crop is a monocotyledonous cereal crop. In the invention, the cereal crop is typically selected from wheat, barley, rice, maize, sorghum, oats, rye, millet, triticale and fonio. Sometimes, the cereal crop is selected from barley, rice, maize, sorghum, oats, rye, millet, triticale and fonio. The crop may not be wheat. Usually, in the invention, the cereal crop is selected from wheat, barley, rice, and maize. More often, in the invention, the cereal crop is selected from wheat, rice and maize. Still more often, in the invention, the cereal crop is selected from wheat and maize. Most often, in the invention the cereal crop is wheat.

In the invention, when the cereal crop is wheat, the wheat may be a winter wheat or a spring wheat. Usually, the wheat is a winter wheat. Those skilled in the art will appreciate that winter wheats are strains of wheat that are planted in the autumn and thus grow over winter. A typical winter wheat is soft wheat (winter), which has the European and Mediterranean Plant Protection Organisation (EPPO) code TRZAW. Thus, the winter wheat may be TRZAW. Winter wheats germinate and develop into young plants that remain in the vegetative phase during the winter and resume growth in early spring. For winter wheats, the physiological stage of heading is typically delayed until the plant experiences vernalization, usually following a period of about 30 to about 60 days at about 0° to 5 °C.

In the invention, the crop may be planted at any suitable depth. For example, the crop may be planted at the locus at a depth of at least 1 cm. More typically, the cereal crop is planted at the locus at a depth of at least 2 cm. The present inventors have surprisingly found that when cereal crops are planted at a depth of at least 1 cm, such as at least 2 cm, the selectivity of napropamide for the crop (i.e. the extent to which the crop is unaffected by the napropamide) is improved. For example, the crop may advantageously be planted at a depth of at least 1 cm, such as at least 2 cm, more usually at least 3 cm.

In the invention, the weed which is selectively controlled at the locus for growing a cereal crop is typically a monocotyledonous weed. Thus, the invention typically provides the use of napropamide for selective control of a monocotyledonous weed at a locus for growing a monocotyledonous cereal crop; wherein the monocotyledonous cereal crop is present at the locus or is planted at the locus after application of said napropamide to the locus. In other words, the invention provides means for selectively controlling monocotyledonous weeds in monocotyledonous crops.

The genus of the weed selectively targeted in the invention is typically selected from *Alopecurus* (for example *Alopecurus myosuroides*), *Echinochloa* (for example *Echinochloa crus-galli* L.), *Bromus* (for example *Bromus secalinus or Bromus tectorum* L.), *Lolium* (for example *Lolium perenne* L.), *Poa* and *Setaria* (for example *Setaria glauca* L. Beauv.)

For example, the weed may be one or more of the following species: *Alopecurus aequalis, Alopecurus albovii, Alopecurus anatolicus, Alopecurus apiatus, Alopecurus arundinaceus, Alopecurus aucheri, Alopecurus baptarrhenius, Alopecurus bonariensis, Alopecurus borii, Alopecurus bornmuelleri, Alopecurus brachystachus, Alopecurus bulbosus, Alopecurus carolinianus, Alopecurus creticus, Alopecurus dasyanthus, Alopecurus davisii, Alopecurus geniculatus, Alopecurus gerardii, Alopecurus glacialis, Alopecurus* × *haussknechtianus, Alopecurus heliochloides, Alopecurus himalaicus, Alopecurus hitchcockii, Alopecurus japonicas, Alopecurus laguroides, Alopecurus lanatus, Alopecurus longiaristatus, Alopecurus magellanicus, Alopecurus* × *marssonii, Alopecurus mucronatus, Alopecurus myosuroides, Alopecurus nepalensis, Alopecurus* × *plettkei, Alopecurus ponticus, Alopecurus pratensis, Alopecurus rendlei, Alopecurus saccatus, Alopecurus setarioides, Alopecurus textilis, Alopecurus turczaninovii, Alopecurus* × *turicensis, Alopecurus utriculatus, Alopecurus vaginatus, Alopecurus* × *winklerianus, Bromus aleutensis, Bromus alopecuros, Bromus anomalus, Bromus arenarius, Bromus arizonicus, Bromus arvensis, Bromus berteroanus, Bromus biebersteinii, Bromus briziformis, Bromus bromoideus, Bromus carinatus, Bromus cabrerensis, Bromus catharticus, Bromus ciliates, Bromus ciliates (inc. ssp. ciliates and richardsonii), Bromus commutatus, Bromus danthoniae, Bromus diandrus, Bromus erectus, Bromus exaltatus, Bromus fibrosus, Bromus frigidus, Bromus frondosus, Bromus grandis, Bromus grossus, Bromus hordeaceus, Bromus hordeaceus (inc. ssp. ferronii, hordeaceus, molliformis, pseudothominii and thominei), Bromus inermis, Bromus inermis (inc. ssp. inermis and pumpellianus*), *Bromus interruptus, Bromus japonicas, Bromus kalmia, Bromus kinabaluensis, Bromus koeieanus, Bromus kopetdagensis, Bromus laevipes, Bromus lanatipes, Bromus lanceolatus, Bromus latiglumis, Bromus Lepidus, Bromus luzonensis, Bromus macrostachys, Bromus madritensis, Bromus mango, Bromus marginatus, Bromus maritimus, Bromus mucroglumis, Bromus nottowayanus, Bromus orcuttianus, Bromus pacificus, Bromus polyanthus (inc. ssp. paniculatus and polyanthus), Bromus porter, Bromus pseudolaevipes, Bromus pseudosecalinus, Bromus pseudothominii, Bromus pubescens, Bromus ramosus (inc ssp. benekii and ramosus), Bromus rigidus, Bromus scoparius, Bromus secalinus, Bromus sitchensis, Bromus squarrosus, Bromus stamineus, Bromus sterilis, Bromus suksdorfii, Bromus tectorum, Bromus texensis, Bromus vulgaris, Bromus willdenowii, Echinochloa brevipedicellata, Echinochloa callopus, Echinochloa chacoensis, Echinochloa colona, Echinochloa crus-galli, Echinochloa crus pavonis, Echinochloa elliptica, Echinochloa glabrescens, Echinochloa haploclada, Echinochloa helodes, Echinochloa holciformis, Echinochloa inundata, Echinochloa jaliscana, Echinochloa jubata, Echinochloa kimberleyensis, Echinochloa lacunaria, Echinochloa macrandra, Echinochloa muricata, Echinochloa obtusiflora, Echinochloa oplismenoides, Echinochloa oryzoides, Echinochloa paludigena, Echinochloa picta, Echinochloa pithopus, Echinochloa polystachya, Echinochloa praestans, Echinochloa pyramidalis, Echinochloa rotundiflora, Echinochloa telmatophila, Echinochloa turneriana, Echinochloa ugandensis, Echinochloa walteri, Lolium arundinaceum, Lolium canariense, Lolium giganteum, Lolium* × *hybridum, Lolium mazzettianum, Lolium multiflorum, Lolium perenne L., Lolium persicum, Lolium pratense, Lolium remotum, Lolium rigidum, Lolium saxatile, Lolium temulentum L, Setaria acromelaena, Setaria alonsoi, Setaria apiculata, Setaria appendiculata, Setaria arizonica, Setaria atrata, Setaria australiensis, Setaria austrocaledonica, Setaria barbata, Setaria barbinodis, Setaria bathiei, Setaria cernua, Setaria chondrachne, Setaria cinerea, Setaria clivalis, Setaria cordobensis, Setaria corrugate, Setaria dielsii, Setaria elementii, Setaria faberi, Setaria fiebrigii, Setaria finite, Setaria forbesiana, Setaria glauca L. Beauv., Setaria globulifera, Setaria gracillima, Setaria grandis, Setaria grisebachii, Setaria guizhouensis, Setaria hassleri, Setaria homonyma, Setaria humbertiana, Setaria hunzikeri, Setaria incrassate, Setaria intermedia, Setaria italic, Setaria jaffrei, Setaria kagerensis, Setaria lachnea, Setaria latifolia, Setaria leucopila, Setaria liebmannii, Setaria lindenbergiana, Setaria longipila, Setaria longiseta, Setaria macrosperma, Setaria macrostachya, Setaria madecassa, Setaria magna, Setaria megaphylla, Setaria mendocina, Setaria mildbraedii, Setaria montana, Setaria nepalense, Setaria nicorae, Setaria nigrirostris, Setaria oblongata, Setaria obscura, Setaria oplismenoides, Setaria orthosticha, Setaria palmeri, Setaria palmifolia, Setaria pampeana, Setaria paraguayensis, Setaria parodii, Setaria parviflora, Setaria paspalidioides, Setaria pauciflora, Setaria paucifolia, Setaria perrieri, Setaria petiolata, Setaria pflanzii, Setaria plicata, Setaria poiretiana, Setaria pseudaristata, Setaria pumila, Setaria queenslandica, Setaria restioidea, Setaria rigid a, Setaria roemeri, Setaria rosengurttii, Setaria sagittifolia, Setaria scabrifolia, Setaria scandens, Setaria scheelei, Setaria scottii, Setaria seriata, Setaria setosa, Setaria sphacelata, Setaria stolonifera, Setaria submacrostachya, Setaria sulcata, Setaria surgens, Setaria tenacissima, Setaria tenax, Setaria texana, Setaria vaginata, Setaria vatkeana, Setaria verticillata, Setaria villosissima, Setaria viridis, Setaria vulpiseta, Setaria welwitschii,* and *Setaria yunnanensis.*

Most often, the weed selectively targeted in the invention is of genus *Alopecurus.* Most typically, the weed is *Alopecurus myosuroides. Alopecurus myosuroides* has the EPPO code ALOMY so is also referred to as ALOMY. For example, the weed may be ALOMY (S strain) or ALOMY (Peldon multi-R (resistant) strain).

One beneficial aspect of the invention is the selective control of weeds in cereal crops wherein the weed is resistant to control by conventional selective herbicides apart from napropamide. Those skilled in the art will appreciate that a weed which is resistant to control by a given substance does not necessarily have to be completely unaffected by application of the substance. Rather, a weed which is resistant to control by a given substance may be capable of growing in the presence of the substance albeit at a lower level than would be the case in the absence of the substance. A weed which is resistant to control by a given substance but is not resistant to control by napropamide may grow better in the presence of an effective amount of the substance than in the presence of an effective amount of napropamide. In other words, napropamide may be more effective in controlling growth of the weed than the other substance.

For example, a herbicide to which a given weed is resistant may typically exhibit less than 97% efficacy against that weed; in other words at least 3% of the weed plants to which an effective amount of the herbicide has been applied may survive the application of the herbicide. More typically, such a herbicide may exhibit less than 95% efficacy against the weed, such as less than 90% efficacy, e.g. less than 80% efficacy, such as less than 70% efficacy, e.g. less than 60% efficacy, for example less than 50% efficacy e.g less than 40% efficacy or even lower such as less than 35% efficacy. In other words, typically at least 5% of the weed plants to which an effective amount of the herbicide has been applied survive application of the herbicide, such as at least 10% of the weed plants, e.g. at least 20% of the weed plants, such as at least 30% of the weed plants, e.g. at least 40% of the weed plants, for example at least 50% of the weed plants, e.g. at least 60% of the weed plants or even more such as more than 65% of the weed plants to which an effective amount of the herbicide has been applied may survive application of the herbicide. By contrast, such weeds are typically more susceptible to control by napropamide; for example, napropamide is typically capable of supressing growth of such resistant weeds by at least 60%; more typically at least 70%, more often at least 80% e.g. at least 90%, for example at least 95% such as at least 97%, at least 98%, or at least 99% compared to the growth of the weed in the absence of napropamide. For example, for some weeds conventional herbicides are less than 50% effective, such as less than 40% effective or even less effective, e.g. less than 35% effective, and napropamide is at least 60% effective, such as at least 70% effective, at least 80% effective or at least 90% effective.

Those skilled in the art will appreciate that the relative efficacies of napropamide and other herbicides depends in part on the amount of the respective herbicides that is applied to the locus. Typically, the efficacy of napropamide can be increased by increasing the amount of napropamide administered to the locus. Often, a lower amount of napropamide can achieve significant control of resistant weeds (e.g. at least 90% control, such as at least 95% control for example at least 97%, 98% or 99% control), whereas a higher amount of a conventional herbicide may fail to reach such levels of control. For example, as discussed further herein, the inventors demonstrated that napropamide may be much more effective than conventional herbicides such as Xerton and can achieve improved control relative to herbicides such as Trooper/Malibu. Furthermore, surprisingly, this control can typically be beneficially achieved at significantly reduced application rates of napropamide compared with herbicides such as Trooper/Malibu.

Non-limiting examples of selective control of resistant weeds by napropamide compared to other conventional herbicides are set out in the Examples.

Often, the weed selectively targeted in the invention is resistant to control by ethofumesate, flufenacet and/or pendimethalin. Typically, the weed selectively targeted in the invention is resistant to control by ethofumesate, flufenacet and/or pendimethalin when the ethofumesate, flufenacet and/or pendimethalin is applied in accordance with best practice and the manufacturer's operating instructions. For example, the weed may be resistant to control by ethofumesate when applied in an amount of 0.6 L/Ha of a suspension concentrate containing 417 g/L ethofumesate. A suspension concentrate containing 417 g/L ethofumesate is commercially available under the trade name Xerton (United Phosphorus). Accordingly, the weed may be resistant to control by Xerton, for example when applied in an amount of from about 0.1 to about 2 L/Ha, such as when applied in an amount of about 0.6 L/Ha. The weed may be resistant to control by flufenacet and pendimethalin when applied in an amount of 2.5 L/Ha of an emulsifiable concentrate containing 60 g/L flufenacet and 300 g/L pendimethalin. An emulsifiable concentrate containing 60 g/L flufenacet and 300 g/L pendimethalin is commercially available under the trade name Trooper (Bast) and the trade name Malibu (Bast). Accordingly, the weed may be resistant to control by Trooper and/or Malibu, for example when applied in an amount of from about 1 to about 10 L/Ha, such as when applied in an amount of about 2.5 L/Ha.

For example, in some embodiments, the weed may by controlled to less than about 60%, such as less than about 50%, or less than 40% by Xerton and/or may be controlled to less than 98% or less than 97% by Malibu and may be controlled to more than 97% (for example, more than 98% or more than 99%) by napropamide when applied in an effective concentration such as in an amount corresponding to from about 10 g/Ha to about 1 kg/Ha napropamide or D-napropamide, more often in an amount corresponding to from about 400 g/Ha to about 700 g/Ha napropamide or D-napropamide.

Typically, in the invention, the herbicide is applied to the locus for growing the cereal crop pre-emergence of said weed. For example, the herbicide can be applied to the locus at a known point after ploughing or with reference to growth of reference plants apart from the weed that have defined growth characteristics that can be monitored and correlated with the likely emergence of the weed.

In another embodiment of the invention, the herbicide may be applied to said locus when said weed has partially grown. The herbicide may be applied to the locus after emergence of the weed.

A known measure of plant growth is provided by the BBCH (Biologische Bundesanstalt, Bundessortenamt und Chemische Industrie) scale. The BBCH-scale is a scale used to identify the phenological development stages of a plant. A series of BBCH-scales have been developed for a range of species including cereal crops and weeds. The BBCH-scale uses a decimal code system, which is divided into principal and secondary growth stages.

As those skilled in the art will appreciate, the BBCH_{weed} scale and the BBCH_{cereal} scale define plant growth as follows:

| **BBCH number** | **Weed** | **Cereal** |
|---|---|---|
| 00 | Dry seed | Dry seed (caryopsis) |
| 01 | Beginning of seed imbibition | Beginning of seed imbibition |
| 02 | | |
| 03 | Seed imbibition complete | Seed imbibition complete |
| 04 | | |
| 05 | Radicle (root) emerged from seed | Radicle emerged from caryopsis |
| 06 | Elongation of radicle, formation of root hairs and/or lateral roots | Radicle elongated, root hairs and/or side roots visible |
| 07 | Hypocotyl with cotyledons or shoot breaking through seed coat | Coleoptile emerged from caryopsis |
| 08 | Hypocotyl with cotyledons or shoot growing towards soil surface | |
| 09 | Emergence: Cotyledons break through soil surface | Emergence: coleoptile penetrates soil surface (cracking stage) |
| 10 | First true leaf emerged from coleoptile | First leaf through coleoptile |
| 11 | First true leaf, leaf pair or whorl unfolded | First leaf unfolded |
| 12 | 2 true leaves, leaf pairs or whorls unfolded | 2 leaves unfolded |
| 13 | 3 true leaves, leaf pairs or whorls unfolded | 3 leaves unfolded |
| 14 | 4 true leaves, leaf pairs or whorls unfolded | 4 leaves unfolded |
| 15 | 5 true leaves, leaf pairs or whorls unfolded | 5 leaves unfolded |
| 16 | 6 true leaves, leaf pairs or whorls unfolded | 6 leaves unfolded |
| 17 | 7 true leaves, leaf pairs or whorls unfolded | 7 leaves unfolded |
| 18 | 8 true leaves, leaf pairs or whorls unfolded | 8 leaves unfolded |
| 19 | 9 or more true leaves, leaf pairs or whorls unfolded | 9 or more leaves unfolded |

BBCH values higher than 19 represent growth of the plant beyond the principle growth stage 2 in which side shoots are formed (tillering).

Typically, in the invention, when the herbicide is applied to the locus when said weed has partially grown, the weed has typically grown to a growth stage of from BBCH_{weed} 01 to BBCH_{weed} 19. More often the weed has grown to a growth stage of from BBCH_{weed} 01 to BBCH_{weed} 11. For example, the weed may have grown to a growth stage of from BBCH_{weed} 09 to BBCH_{weed} 14 such as about BBCH_{weed} 11.

Typically, in the invention, the herbicide is applied to the locus for growing the cereal crop pre-emergence of the crop. For example, the herbicide can be applied to the locus before seeding, during seeding, or, in most applications, after seeding and before the crop emerges, so as to prevent the emergence of weeds. Thus, the herbicide can be applied to the locus before planting the crop (for instance before sowing seeds of the crop), during planting the crop (for instance during sowing seeds of the crop), or, in most applications, after planting the crop (for instance after sowing seeds of the crop) and before the crop emerges.

In another embodiment, the herbicide may be applied to the locus after emergence of the crop. Additionally or alternatively, the herbicide may be applied to the locus when said crop has partially grown. For example, the crop may have grown to a growth stage of from BBCH_{cereal} 01 to BBCH_{cereal} 19. More often the crop has grown to a growth stage of from BBCH_{cereal} 01 to BBCH_{cereal} 11. For example, the crop may have grown to a growth stage of from BBCH_{cereal} 09 to BBCH_{cereal} 14 such as about BBCH_{cereal} 11.

Typically, application of the herbicide to the locus involves application of the herbicide to soil at the locus. Usually, the herbicide is applied to the surface of the soil. However, when the herbicide is applied to the locus when the weed has partially grown, especially when the weed has grown to a growth stage post emergence, for example to a growth stage of from BBCH_{weed} 09 to BBCH_{weed} 19, the herbicide can be applied directly to the weed. Typically, the herbicide is applied by spraying.

As mentioned above, the napropamide employed in the invention may be racemic napropamide, i.e. it may be a mixture of equal amounts of D-napropamide (also referred to as napropamide-M or (R)-napropamide) and L-napropamide (also referred to as (S)-napropamide). However, it is known that, of the two isomers of napropamide, the D-isomer is the only one to have significant herbicidal activity; D-napropamide may therefore be employed in preference to racemic napropamide. Often, therefore, the napropamide employed in the invention contains more D-napropamide than L-napropamide. For instance, the molar ratio of D-napropamide to L-napropamide, in the napropamide employed in the invention, may be greater than 1:1. The molar ratio of D-napropamide to L-napropamide employed may for instance be at least 3:2, or for instance at least 7:3, for instance at least 4:1, or at least 9:1. The napropamide employed in the invention may for instance be D-napropamide. Accordingly, the herbicide is often substantially free or free of L-napropamide ((S)-napropamide). In other words, the invention does not exclude compositions comprising L-napropamide wherein the active ingredient is D-napropamide. However, typically in the invention the herbicide does not comprise L-napropamide. Thus, the napropamide employed in the invention may consist of D-napropamide.

In the invention, the herbicide may be applied in any suitable amount to achieve control of the weed crop at the locus. The herbicide may for instance be applied in an amount corresponding to from about 10 g/Ha to about 2 kg/Ha of D-napropamide, or for instance from about 10 g/Ha to about 1.5 kg/Ha of D-napropamide. For example, the herbicide may be applied in an amount corresponding to from about 10 g/Ha to about 1 kg/Ha D-napropamide. For example, the herbicide may be applied from a suspension concentrate comprising about 450 g/L of D-napropamide. Thus, a 0.1 L/Ha administration of such a composition corresponds to an administration of 45 g/Ha of D-napropamide. Similarly, a 0.4 L/Ha administration of such a composition corresponds to an administration of 180 g/Ha of D-napropamide; a 0.7 L/Ha administration of such a composition corresponds to an administration of 315 g/Ha of D-napropamide; a 1 L/Ha administration of such a composition corresponds to an administration of 450 g/Ha of D-napropamide; a 1.4 L/Ha administration of such a composition corresponds to an administration of 630 g/Ha of D-napropamide; and a 1.7 L/Ha administration of such a composition corresponds to an administration of 765 g/Ha of D-napropamide; etc.

More often, in the invention, the herbicide is applied in an amount corresponding to from about 400 g/Ha to about 700 g/Ha D-napropamide. The inventors have found that such administration levels are particularly advantageous as the long term effects on the crop (e.g. measured from about 25 to about 54 days after anthesis, DAA) may be improved at such administration levels; whilst the activity against weeds is not reduced. For example, administration regimes corresponding to from about 1 to about 1.5 L/Ha of a suspension concentrate comprising about 450 g/L of D-napropamide have been found to be particularly advantageous.

It should be emphasised that each amount of napropamide in g or kg recited in the preceding two paragraphs is an amount of the D-isomer, i.e. D-napropamide, not a total amount of napropamide including both D-napropamide and L-napropamide. As discussed hereinbefore, the herbicide may or may not comprise L-napropamide in addition to the D-napropamide (for instance it may contain racemic napropamide). If the herbicide does not contain any L-napropamide, i.e. if the napropamide employed in the herbicide composition is only D-napropamide, then each value given above in the preceding two paragraphs for the amount of D-napropamide will be the same as the total amount of napropamide in the herbicide. If on the other hand the napropamide employed in the herbicide is racemic napropamide, and therefore contains a 1:1 molar ratio of D-napropamide and L-napropamide, each value given above in the preceding two paragraphs for the amount of D-napropamide will be half the total amount of napropamide in the herbicide that is applied including both D- and L- napropamide.

For example, in some embodiments the napropamide employed in the invention is racemic napropamide and the total amount of napropamide including both the D- and L- isomers will be double the amount specified above for D-napropamide. Thus, in some embodiments, the napropamide employed in the herbicide is racemic napropamide and the herbicide may be applied to achieve control of the weed crop at the locus in an amount corresponding to from about 20 g/Ha to about 4 kg/Ha of racemic napropamide, or for instance from about 20 g/Ha to about 3 kg/Ha of racemic napropamide. For example, the herbicide may be applied in an amount corresponding to from about 20 g/Ha to about 2 kg/Ha racemic napropamide. For example, the herbicide may be applied from a suspension concentrate comprising about 450 g/L of racemic napropamide. Thus, a 0.2 L/Ha administration of such a composition corresponds to an administration of 90 g/Ha of racemic napropamide. Similarly, a 0.8 L/Ha administration of such a composition corresponds to an administration of 360 g/Ha of racemic napropamide; a 1.4 L/Ha administration of such a composition corresponds to an administration of 630 g/Ha of racemic napropamide; a 2 L/Ha administration of such a composition corresponds to an administration of 900 g/Ha of racemic napropamide; a 2.8 L/Ha administration of such a composition corresponds to an administration of 1260 g/Ha of racemic napropamide; and a 3.4 L/Ha administration of such a composition corresponds to an administration of 1530 g/Ha of racemic napropamide; etc.

In some embodiments of the invention, the napropamide is racemic napropamide and the herbicide is applied in an amount corresponding to from about 800 g/Ha to about 1400 g/Ha racemic napropamide. Such administration levels are particularly advantageous as the long term effects on the crop (e.g. measured from about 25 to about 54 days after anthesis, DAA) may be improved at such administration levels; whilst the activity against weeds is not reduced. For example, administration regimes corresponding to from about 2 to about 3 L/Ha of a suspension concentrate comprising about 450 g/L of racemic napropamide are particularly advantageous.

In the invention, the napropamide is often comprised in a composition comprising at least one agronomically acceptable excipient, diluent, adjuvant and/or safener in addition to the napropamide. Agronomically acceptable excipients may be selected from carriers, inert materials, organic or inorganic solvents, minerals, mixed solvents, wetting agents and/or emulsifying agents, adhesive agents, anti-caking agents, deflocculating agents, and the like. Such a herbicidal composition may be formulated in the form of solid and liquid formulations. Agronomically acceptable adjuvants may be selected from preservatives, surfactants, wetting agents, emulsifying agents, and dispersing agents. Agronomically acceptable diluents may be selected from liquid diluents such as water and solid diluents such as clay, diatomaceous earth, bentonite, and silica. Liquid diluents are most commonly used in the invention. Water is typically used as the diluent. Agronomically acceptable safeners may act by interacting directly with the biochemical targets or receptor proteins of herbicides in crop plants; by reducing the amount of herbicide reaching crop plants in an active form either by reducing herbicide uptake or translocation; and/or by increasing the degradation of herbicides to less active or immobile metabolites.

In the invention, the napropamide is often comprised in a composition further comprising an additional active agent. The additional active agent is typically another herbicide such as a second herbicide selective against dicotyledonous weeds. A broad spectrum herbicide may also be used. The additional active agent is typically not active against cereal crops. The additional active agent may for example comprise ethofumesate, flufenacet and/or pendimethalin.

The invention also provides a method of selectively controlling a weed at a locus for growing a cereal crop, said method comprising application of napropramide to the locus, wherein a cereal crop is present at the locus or is planted at the locus after application of said napropamide to the locus. In such aspects of the invention, the weed is typically as defined herein; the cereal is typically as defined herein; the napropamide is typically as defined herein and/or the application of the napropramide is typically as defined herein. The method may comprise application of the herbicide to the locus followed by planting of the cereal crop, or may comprise planting of the cereal crop followed by application of the herbicide.

The invention also provides a locus for growing a cereal crop, wherein a weed and a cereal crop are both present at the locus and the locus has a herbicide for selective control of the weed applied thereto, wherein said herbicide consists of or comprises napropamide. In such aspects of the invention, the weed is typically as defined herein; the cereal is typically as defined herein; the napropamide is typically as defined herein and/or the application of the napropramide is typically as defined herein. The locus, which typically comprises soil suitable for growing the cereal crop, in addition to the weed, cereal crop and herbicide composition themselves, may also be as further defined herein. For instance, the locus may be a container such as a pot or grow-bag, a garden bed or a field.

The invention also provides a kit comprising napropamide for the selective control of a weed at a locus for growing a cereal crop and instructions for use. The instructions for use typically comprise instructions for the application of the napropamide to the locus. The cereal crop is present at the locus or is planted at the locus after application of said napropamide to the locus.

Typically, the kit comprises:
i) a first component, wherein the first component comprises napropamide;
ii) a second component comprising an agrochemically acceptable excipient, diluent, adjuvant and/or safener;
and optionally further comprises:
iii) a third component comprising an additional active agent; and/or
iv) instructions for use.

Typically, the instructions for use comprise instructions directing a user to admix the components of the kit. Usually, the instructions for use comprise instructions directing a user to admix the components of the kit before application of the components of the kit to the locus.

Often, the components of the kit are packaged separately. However, the invention is not limited to kits in which the components are packaged separately. For example, the first component and the second component may be packaged together or formulated together. If a third component as described above is present, then the first component may be packaged together or formulated together with the third component. Alternatively, the second component may be packaged together or formulated together with the third component. In yet another embodiment, the first component, the second component and the third component may be packaged together or formulated together.

In embodiments of the kit of the invention in which the first component and the third component are packaged separately, the first component and the third component may be tank mixed before being administered to the locus. Typically such administration to the locus is by spraying.

In embodiments of the kit of the invention in which the first component and the third component are packaged together, other components e.g. the second component may be packaged separately. In such embodiments, the components (i.e. (i) the first component and the third component; and (ii) the second component) may be tank mixed before being administered to the locus. Typically such administration to the locus is by spraying.

Typically, therefore, in the kit of the invention:
a) a third component comprising a additional active agent is present and said first component and said third component are packaged separately, wherein preferably first component and said third component are provided in a form suitable for tank mixing prior to administration to a locus; or
b) a third component comprising a additional active agent is present and said first component and said third component are formulated together; wherein preferably first component and said third component are provided in a form suitable for tank mixing with said second component prior to administration to a locus;

Typically, in the kit of the invention, said napropamide is D-napropamide.

Typically, in the kit of the invention, when a third component comprising a additional active agent is present, said additional active agent is selected from ethofumesate, flufenacet and/or pendimethalin.

Typically, the instructions for use direct the user to administer the first component (i.e. the napropamide or a composition comprising the napropamide) to a locus for growing a cereal crop; wherein the cereal crop is present at the locus or is planted at the locus after said administration. Often, the instructions for use direct the user to administer the first component (i.e. the napropamide or a composition comprising the napropamide) to a locus for growing a cereal crop; wherein a weed and the cereal crop are both present at the locus. In other words, the instructions for use typically direct the user to administer the first component (i.e. napropamide or a composition comprising napropamide) at the locus growing a cereal crop and a monocotyledonous weed.

Typically, the instructions for use direct the user to administer the first component (i.e. the napropamide or a composition comprising the napropamide) to a cereal crop which is planted at the locus at a depth of at least 1 cm, e.g. at least 2 cm.

Typically, the instructions for use direct the user to administer the first component (i.e. the napropamide or a composition comprising the napropamide) at a locus wherein the weed *Alopecurus* is present. Often, the instructions for use direct the user to administer the first component (i.e. the napropamide or a composition comprising the napropamide) to a locus growing a cereal crop and a weed, wherein the weed is resistant to control by conventional selective herbicides apart from napropamide.

Typically, the instructions for use direct the user to administer the first component (i.e. the napropamide or a composition comprising the napropamide), to a locus growing a cereal crop and a monocotyledonous weed, along with a second herbicide. The second herbicide is typically comprised in the third component if present.

The following examples illustrate the invention. They do not, however, limit the invention in any way. In particular, there are may measures of efficacy and selectivity of a herbicide composition when applied to a locus for growing a cereal crop, and so a negative result in any specific method is not determinative.

### EXAMPLES

A suspension concentrate (SC) comprising 450 g/L napropamide-m (40.9% w/w) was produced, and was applied to crops as described herein. Suspension concentrates of napropamide are commercially available under the trade name Devrinol (United Phosphorus).

### Example 1

A herbicide composition consisting of an SC of 450 g/L napropamide-m was applied to winter wheat either pre- or post-emergence. The normalised plant count was determined as a percentage of the plant count observed in the absence of the herbicide. Control experiments were conducted with the conventional herbicide Trooper, as defined above. The amount and administration route of the compositions applied to the crop is shown in Table 1 below.

**Table 1**

| **Herbicide** | **Amount Administered (L/Ha)** | **Administration route** |
|---|---|---|
| Napropamide-m, SC @ 450 g/L | 0.40 | pre-em |
| Napropamide-m, SC @ 450 g/L | 0.70 | pre-em |
| Napropamide-m, SC @ 450 g/L | 1.00 | pre-em |
| Napropamide-m, SC @ 450 g/L | 1.40 | pre-em |
| Napropamide-m, SC @ 450 g/L | 1.70 | pre-em |
| Napropamide-m, SC @ 450 g/L | 0.70 | early post-em |
| Napropamide-m, SC @ 450 g/L | 1.40 | early post-em |
| Napropamide-m, SC @ 450 g/L + Trooper | 0.70 + 2.50 | early post-em |
| Napropamide-m, SC @ 450 g/L + Trooper | 1.40 + 2.50 | early post-em |
| Trooper / Malibu | 2.50 | pre-em |
| Trooper | 5.00 | pre-em |
| Trooper | 4.00 | pre-em |
| Trooper | 8.00 | pre-em |

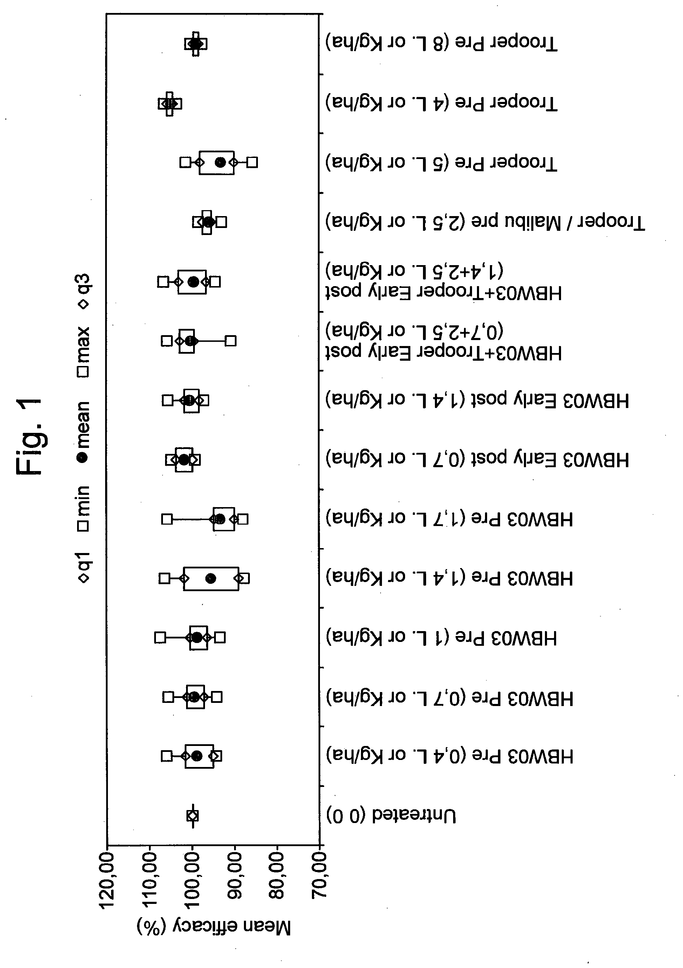

Results from an average of 6 field trials (napropamide; Trooper low dose: 4 sites; Trooper high dose: 2 sites) with herbicide application in October are shown in Figure 1. As can be seen, the application of napropamide had no detectable effect on the growth of winter wheat. Plant survival after emergence was 100% of the survival rate in the absence of napropamide.

Similar experiments were carried out at another site where the effect of seed depth was to be determined, see Example 3 below. Control experiments were conducted with the conventional herbicides Trooper and Xerton, as defined above. The amount and administration route of the compositions applied to the crop is shown in Table 2 below.

**Table 2**

| **Herbicide** | **Amount Administered (L/Ha)** | **Administration route** |
|---|---|---|
| None (crop untreated) | | |
| Napropamide-m, SC @ 450 g/L | 0.4 | pre-em |
| Napropamide-m, SC @ 450 g/L | 0.7 | pre-em |
| Napropamide-m, SC @ 450 g/L | 1 | pre-em |
| Napropamide-m, SC @ 450 g/L | 1.4 | pre-em |
| Napropamide-m, SC @ 450 g/L | 1.7 | pre-em |
| Trooper / Malibu | 2.5 | pre-em |
| Xerton | 0.6 | pre-em |

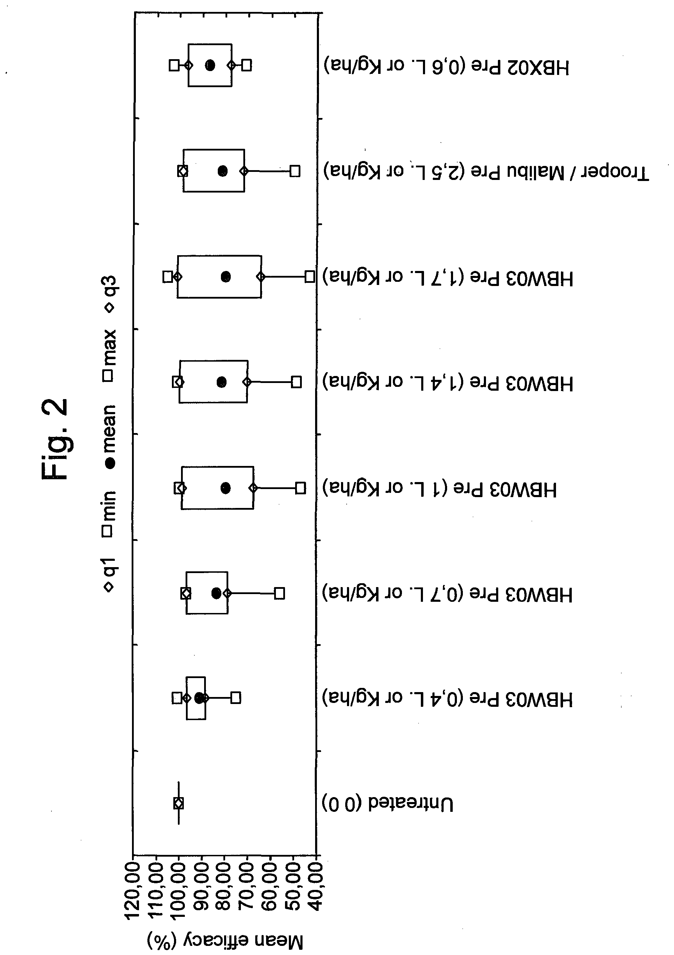

Results are shown in Figure 2. As can be seen, the application of napropamide had very low effect on the growth of winter wheat. Plant survival after emergence was comparable with that following application of conventional herbicides Trooper/Malibu and Xerton.

### Example 2

A herbicide composition consisting of an SC of 450 g/L napropamide-m was applied to winter wheat either pre- or post-emergence (BBCH 11). The percentage phytotoxicity was determined. Control experiments were conducted with the conventional herbicide Trooper, as defined above. The amount and administration route of the compositions applied to the crop and the results thereof is shown in Table 3 below.

**Table 3**

| **Herbicide** | **Amount Administered (L/Ha)** | **Administration route** | **Phytotoxicity / %** | | | |
|---|---|---|---|---|---|---|
| | | | **2 weeks** | **4 weeks** | **146 DAA** | **159 DAA** |
| None (crop untreated) | - | - | | | | |
| Napropamide-m, SC @ 450 g/L | 0.4 | pre-em | 0.0 | 0.0 | 0 | 0 |
| Napropamide-m, SC @ 450 g/L | 0.7 | pre-em | 0.0 | 0.0 | 0 | 0 |
| Napropamide-m, SC @ 450 g/L | 1 | pre-em | 0.0 | 0.2 | 0 | 2 |
| Napropamide-m, SC @ 450 g/L | 1.4 | pre-em | 0.1 | 1.4 | 0 | 4 |
| Napropamide-m, SC @ 450 g/L | 1.7 | pre-em | 0.6 | 3.2 | 5 | 9 |
| Napropamide-m, SC @ 450 g/L | 0.7 | BBCH 11 | 0.0 | 0.0 | 0 | 2 |
| Napropamide-m, SC @ 450 g/L | 1.4 | BBCH 11 | 0.0 | 0.0 | 0 | 6 |
| Napropamide-m, SC @ 450 g/L + Trooper | 0.7 + 2.5 | BBCH 11 | 0.0 | 1.7 | 0 | 2 |
| Napropamide-m, SC @ 450 g/L + Trooper | 1.4 + 2.5 | BBCH 11 | 0.0 | 1.9 | 0 | 4 |
| Trooper / Malibu | 2.5 or 4 | pre-em | 0.1 | 1.0 | 0 | 6 |
| Trooper | 5 or 8.00 | pre-em | 1.2 | 3.5 | 1 | 13 |

The results show that napropamide shows low phytotoxicity against cereals such as wheat.

### Example 3

Experiments were conducted to assess the effect of the depth at which crop seeds were planted. A herbicide composition consisting of an SC of 450 g/L napropamide-m was applied by spraying to winter wheat pre-emergence. Normalised plant count was determined at 20DAA as a percentage of the plant count observed in the absence of the herbicide. Control experiments were conducted with the conventional herbicides Trooper and Xerton, as defined above. The amount of the compositions applied to the crop, and the results on plant growth, are shown in Table 4 below.

**Table 4**

| **Herbicide** | **Amount Administered (L/Ha)** | **Crop planting depth** / **cm** | | | |
|---|---|---|---|---|---|
| | | **0.5** | **1** | **2** | **3** |
| None (crop untreated) | - | 100 | 100 | 100 | 100 |
| Napropamide-m, SC @ 450 g/L | 0.4 | 78 | 90 | 97 | 100 |
| Napropamide-m, SC @ 450 g/L | 0.7 | 73 | 83 | 92 | 100 |
| Napropamide-m, SC @ 450 g/L | 1 | 60 | 75 | 92 | 98 |
| Napropamide-m, SC @ 450 g/L | 1.4 | 56 | 71 | 86 | 101 |
| Napropamide-m, SC @ 450 g/L | 1.7 | 50 | 72 | 90 | 99 |
| Xerton | 0.6 | 75 | 82 | 95 | 98 |
| Malibu | 2.5 | 70 | 83 | 98 | 100 |

Results show that napropamide is selective for winter wheat and is particularly beneficial at increased sowing depths.

### Example 4

Experiments were conducted to assess the effect of increased time (measured as days after anthesis, DAA) following application of a herbicide composition consisting of an SC of 450 g/L napropamide-m. The herbicide composition was applied by spraying in a pot test (planting depth 2 cm) to winter wheat pre-emergence. Normalised plant count was determined as a percentage of the plant count observed in the absence of the herbicide. Control experiments were conducted with the conventional herbicides Trooper and Xerton, as defined above. The amount of the compositions applied to the crop, and the resulting plant growth, are shown in Table 5 below.

**Table 5**

| **Herbicide** | **Amount Administered (L/Ha)** | **Plant growth** | | |
|---|---|---|---|---|
| | | **11 DAA** | **25 DAA** | **54 DAA** |
| Napropamide-m, SC @ 450 g/L | 0.4 | 96 | 93 | 99 |
| Napropamide-m, SC @ 450 g/L | 0.7 | 92 | 94 | 99 |
| Napropamide-m, SC @ 450 g/L | 1 | 86 | 93 | 96 |
| Napropamide-m, SC @ 450 g/L | 1.4 | 87 | 92 | 99 |
| Napropamide-m, SC @ 450 g/L | 1.7 | 92 | 94 | 88 |
| Xerton | 0.6 | 81 | 83 | 69 |
| Malibu | 2.5 | 89 | 96 | 101 |

Results show that napropamide is selective for winter wheat and that any phytotoxic effects are diminished over time. Significantly reduced phytotoxicity is observed compared to the conventional herbicide Xerton. Particularly beneficial effects are seen when napropamide is administered below 1.7 L/Ha of a SC @ 450 g/L.

### Example 5

Experiments were conducted to assess the effect of increased time (measured as days after anthesis, DAA) following application of a herbicide composition consisting of an SC of 450 g/L napropamide-m. The herbicide composition was applied by spraying in a pot test (planting depth 2 cm) to winter wheat pre-emergence. Percentage phytotoxicity was determined. Control experiments were conducted with the conventional herbicides Trooper and Xerton, as defined above. The amount of the compositions applied to the crop, and the resulting phytotoxicity, are shown in Table 6 below.

**Table 6**

| **Herbicide** | **Amount Administered (L/Ha)** | **Phytotoxicity / %** | | |
|---|---|---|---|---|
| | | **11 DAA** | **25 DAA** | **54 DAA** |
| Napropamide-m, SC @ 450 g/L | 0.4 | 1.5 | 0.0 | 0.0 |
| Napropamide-m, SC @ 450 g/L | 0.7 | 6.0 | 1.3 | 0.0 |
| Napropamide-m, SC @ 450 g/L | 1 | 18.3 | 8.8 | 0.0 |
| Napropamide-m, SC @ 450 g/L | 1.4 | 23.8 | 17.0 | 8.8 |
| Napropamide-m, SC @ 450 g/L | 1.7 | 23.8 | 16.8 | 15.0 |
| Xerton | 0.6 | 69.5 | 76.8 | 73.0 |
| Malibu | 2.5 | 9.0 | 7.5 | 0.0 |

Results show that napropamide is selective for winter wheat and that any phytotoxic effects are diminished over time. Significantly reduced phytotoxicity is observed compared to the conventional herbicide Xerton.

### Example 6

Experiments were conducted to assess the efficacy of herbicide compositions comprising napropamide-m to control a common weed, ALOMY (*Alopecurus myosuroides* S strain) which is resistant to control by conventional herbicides such as Xerton. Percentage efficacy of the herbicide composition was determined over time (measured as days after anthesis, DAA) following application of a herbicide composition consisting of an SC of 450 g/L napropamide-m. The herbicide composition was applied by spraying in a pot test (planting depth 2 cm) to ALOMY (S strain) pre-emergence. Control experiments were conducted with the conventional herbicides Trooper/Malibu and Xerton, as defined above. The amount of the compositions applied to the weed, and the resulting percentage control on the weed growth, are shown in Table 7 below.

**Table 7**

| **Herbicide** | **Amount Administered (L/Ha)** | **Efficacy / %** | | |
|---|---|---|---|---|
| | | **11 DAA** | **25 DAA** | **54 DAA** |
| Napropamide-m, SC @ 450 g/L | 0.4 | 81.7 | 88.0 | 93.0 |
| Napropamide-m, SC @ 450 g/L | 0.7 | 85.4 | 89.7 | 91.3 |
| Napropamide-m, SC @ 450 g/L | 1 | 93.0 | 97.6 | 99.3 |
| Napropamide-m, SC @ 450 g/L | 1.4 | 96.7 | 99.3 | 98.3 |
| Napropamide-m, SC @ 450 g/L | 1.7 | 99.1 | 98.8 | 99.3 |
| Xerton | 0.6 | 49.3 | 48.6 | 50.2 |
| Trooper/Malibu | 2.5 | 90.6 | 96.4 | 96.6 |

Results show that napropamide is effective in controlling growth of weeds such as ALOMY (S strain). Napropamide is much more effective than conventional herbicides such as Xerton and can achieve improved control relative to herbicides such as Trooper/Malibu at significantly lower application rates.

### Example 7

Experiments were conducted to assess the efficacy of herbicide compositions comprising napropamide-m to control a common weed, ALOMY (*Alopecurus myosuroides* Peldon multi-R strain) which is resistant to control by conventional herbicides such as Xerton. Percentage efficacy of the herbicide composition was determined over time (measured as days after anthesis, DAA) following application of a herbicide composition consisting of an SC of 450 g/L napropamide-m. The herbicide composition was applied by spraying in a pot test (planting depth 2 cm) to ALOMY (Peldon multi-R strain) pre-emergence. Control experiments were conducted with the conventional herbicides Trooper/Malibu and Xerton, as defined above. The amount of the compositions applied to the weed, and the resulting percentage control on the weed growth, are shown in Table 8 below.

**Table 8**

| **Herbicide** | **Amount Administered (L/Ha)** | **Efficacy / %** | | |
|---|---|---|---|---|
| | | **11 DAA** | **25 DAA** | **54 DAA** |
| Napropamide-m, SC @ 450 g/L | 0.4 | 66.3 | 74.5 | 78.9 |
| Napropamide-m, SC @ 450 g/L | 0.7 | 92.1 | 90.9 | 86.5 |
| Napropamide-m, SC @ 450 g/L | 1 | 91.6 | 90.9 | 94.0 |
| Napropamide-m, SC @ 450 g/L | 1.4 | 91.4 | 92.7 | 94.0 |
| Napropamide-m, SC @ 450 g/L | 1.7 | 100.0 | 100.0 | 100.0 |
| Xerton | 0.6 | 32.8 | 43.7 | 52.6 |
| Trooper/Malibu | 2.5 | 100.0 | 100.0 | 97.7 |

Results show that napropamide is effective in controlling growth of weeds such as ALOMY (Peldon multi-R strain). Napropamide is much more effective than conventional herbicides such as Xerton and can achieve improved control relative to herbicides such as Trooper/Malibu, and at significantly reduced application rates. Particularly beneficial effects are seen when napropamide is administered above 1 L/Ha of a SC @ 450 g/L.

### Example 8

Experiments were conducted to assess the efficacy of herbicide compositions comprising napropamide-m to control a common weed, ALOMY (*Alopecurus myosuroides*), in a field trial. Weed plants occurred at a density of ca. 5-10 plants/m². Percentage efficacy of the herbicide composition was determined at 207 days after anthesis, DAA, following application of a herbicide composition consisting of an SC of 450 g/L napropamide-m. The herbicide composition was applied by spraying either pre-emergence or post-emergence (BBCH 11) of the weed. Control experiments were conducted with the conventional herbicides Trooper, as defined above. The amount of the compositions applied to the weed, and the resulting percentage control on the weed growth, are shown in Table 9 below.

**Table 8**

| **Herbicide ( g/Ha )** | | | **Herbicide** | **Administration** | **Amount Administered (L/Ha)** | **Efficacy / %** |
|---|---|---|---|---|---|---|
| Nap | FFT | PDM | | | | **207 DAA** |
| 108 | | | Napropamide-m, SC @ 450 g/L | Pre-em | 0.4 | 45 |
| 315 | | | Napropamide-m, SC @ 450 g/L | Pre-em | 0.7 | 50 |
| 450 | | | Napropamide-m, SC @ 450 g/L | Pre-em | 1 | 55 |
| 630 | | | Napropamide-m, SC @ 450 g/L | Pre-em | 1.4 | 68 |
| 765 | | | Napropamide-m, SC @ 450 g/L | Pre-em | 1.7 | 70 |
| 315 | | | Napropamide-m, SC @ 450 g/L | BBCH 11 | 0.7 | 58 |
| 630 | | | Napropamide-m, SC @ 450 g/L | BBCH 11 | 1.4 | 65 |
| 315 | 150 | 750 | Napropamide-m, SC @ 450 g/L + Trooper | BBCH 11 | 0.7 + 2.5 | 94 |
| 630 | 150 | 750 | Napropamide-m, SC @ 450 g/L + Trooper | BBCH 11 | 1.4 + 2.5 | 96 |
| | 150 | 750 | Trooper | Pre-em | 2.5 | 90 |
| | 300 | 1500 | Trooper | Pre-em | 5 | 98 |

| | | | | | | |
|---|---|---|---|---|---|---|
| Nap = Napropamide-m FFT = Flufenacet PDM = Pendimethalin | | | | | | |

Results show that napropamide is effective in controlling growth of weeds such as ALOMY and can be administered with conventional herbicides such as Trooper to improve the efficacy of weed control.

The following numbered paragraphs of the description set out certain aspects of the present invention.
1. Use of napropamide for selective control of a weed at a locus for growing a cereal crop; wherein the cereal crop is present at the locus or is planted at the locus after application of said napropamide to the locus.
2. Use of napropamide according to paragraph 1, wherein said weed is a monocotyledonous weed.
3. Use of napropamide according to paragraph 1 or paragraph 2, wherein the genus of said weed is selected from *Alopecurus* (for example *Alopecurus myosuroides*), *Echinochloa* (for example *Echinochloa crus-galli* L.), *Bromus* (for example *Bromus secalinus of Bromus tectorum* L.), *Lolium* (for example *Lolium perenne* L.) and *Setaria* (for example *Setaria glauca* L. Beauv.)
4. Use of napropamide according to any one of the preceding paragraphs, wherein said weed is of genus *Alopecurus,* wherein preferably said weed is *Alopecurus myosuroides.*
5. Use of napropamide according to any one of the preceding paragraphs, wherein said weed is resistant to control by ethofumesate, flufenacet and/or pendimethalin.
6. Use of napropamide according to any one of the preceding paragraphs, wherein said cereal crop is selected from wheat, barley, rice, maize, sorghum, oats, rye, millet, triticale and fonio.
7. Use of napropamide according to any one of the preceding paragraphs, wherein said cereal crop is wheat.
8. Use of napropamide according to paragraph 6 or paragraph 7, wherein said wheat is a winter wheat.
9. Use of napropamide according to any one of the preceding paragraphs, wherein said napropamide is D-napropamide.
10. Use of napropamide according to any one of the preceding paragraphs, wherein said napropamide is applied to said locus pre-emergence of said cereal crop.
11. Use of napropamide according to paragraph 12 wherein said napropamide is applied to said locus after planting the cereal crop at the locus.
12. Use of napropamide according to any one paragraphs 1 to 11, wherein said napropamide is applied to said locus after emergence of said cereal crop.
13. Use of napropamide according to any one paragraphs 1 to 11 and 14, wherein said napropamide is applied to said locus when said cereal crop has grown to a growth stage of from BBCH_{cereal} 01 to BBCH_{cereal} 19, and preferably when said cereal crop has grown to a growth stage of from BBCH_{cereal} 01 to BBCH_{cereal} 11.
14. Use of napropamide according to any one of the preceding paragraphs, wherein said cereal crop is planted at the locus at a depth of at least 1 cm.
15. Use of napropamide according to any one of the preceding paragraphs, wherein said cereal crop is planted at the locus at a depth of at least 2 cm.
16. Use of napropamide according to any one of the preceding paragraphs, wherein said napropamide is applied in an amount corresponding to about 10 g/Ha to about 1 kg/Ha D-napropamide.
17. Use of napropamide according to any one of the preceding paragraphs, wherein said napropamide is applied in an amount corresponding to about 400 g/Ha to about 700 g/Ha D-napropamide.
18. Use of napropamide according to any one of the preceding paragraphs, wherein said napropamide is comprised in a herbicide composition further comprising at least one agronomically acceptable excipient, diluent, adjuvant and/or safener.
19. Use of napropamide according to any one of the preceding paragraphs, wherein said napropamide is comprised in a herbicide composition further comprising an additional active agent, wherein preferably said additional active agent is selected from ethofumesate, flufenacet and/or pendimethalin.
20. A method of selectively controlling a weed at a locus for growing a cereal crop, said method comprising application of napropamide to the locus, wherein a cereal crop is present at the locus or is planted at the locus after application of said napropamide to the locus.
21. A method according to paragraph 22, wherein:
   - said weed is as defined in any one of paragraphs 2 to 5; and/or
   - said cereal is as defined in any one of paragraphs 6, 7, 8, 14 or 15; and/or
   - said napropamide is as defined in any one of paragraphs 9, 18 or 19; and/or
   - said application is as defined in any one of paragraphs 10, 11, 12, 13, 16 or 17.
22. A locus for growing a cereal crop, wherein a weed and a cereal crop are both present at the locus and the locus has a herbicide for selective control of the weed applied thereto, wherein said herbicide consists of or comprises napropamide.
23. A locus according to paragraph 24, wherein:
   - said weed is as defined in any one of paragraphs 2 to 5; and/or
   - said cereal is as defined in any one of paragraphs 6, 7, 8, 14 or 15; and/or
   - said napropamide is as defined in any one of paragraphs 9, 18 or 19; and/or
   - said herbicide is applied to said locus as defined in paragraph 10, 11, 12, 13, 16 or 17.
24. A kit, comprising:
   i) a first component, wherein the first component comprises napropamide; and
   ii) a second component comprising an agrochemically acceptable excipient, diluent, adjuvant and/or safener;
   and optionally further comprising:
   iii) a third component comprising an additional active agent; and/or
   iv) instructions for use
25. A kit according to paragraph 24, wherein:
   a) a third component comprising a additional active agent is present and said first component and said third component are packaged separately, wherein preferably first component and said third component are provided in a form suitable for tank mixing prior to administration to a locus; or
   b) a third component comprising a additional active agent is present and said first component and said third component are formulated together; wherein preferably first component and said third component are provided in a form suitable for tank mixing with said second component prior to administration to a locus;
   and/or
   - said napropamide is D-napropamide; and/or
   - said additional active agent is selected from ethofumesate, flufenacet and/or pendimethalin.

## Claims

1. Use of napropamide for selective control of a weed at a locus for growing a cereal crop; wherein the cereal crop is present at the locus or is planted at the locus after application of said napropamide to the locus.

2. Use of napropamide according to claim 1, wherein said weed is a monocotyledonous weed, optionally wherein the genus of said weed is selected from *Alopecurus* (for example *Alopecurus myosuroides*), *Echinochloa* (for example *Echinochloa crus-galli* L.), *Bromus* (for example *Bromus secalinus or Bromus tectorum* L.), *Lolium* (for example *Lolium perenne* L.) and *Setaria* (for example *Setaria glauca* L. Beauv.).

3. Use of napropamide according to claim 1 or claim 2, wherein said weed is of genus *Alopecurus,* wherein preferably said weed is *Alopecurus myosuroides.*

4. Use of napropamide according to any one of the preceding claims, wherein said weed is resistant to control by ethofumesate, flufenacet and/or pendimethalin.

5. Use of napropamide according to any one of the preceding claims, wherein said cereal crop is selected from wheat, barley, rice, maize, sorghum, oats, rye, millet, triticale and fonio, optionally wherein said cereal crop is wheat, optionally wherein said wheat is a winter wheat.

6. Use of napropamide according to any one of the preceding claims, wherein said napropamide is D-napropamide.

7. Use of napropamide according to any one of the preceding claims, wherein said napropamide is applied to said locus pre-emergence of said cereal crop, optionally wherein said napropamide is applied to said locus after planting the cereal crop at the locus.

8. Use of napropamide according to any one claims 1 to 6, wherein said napropamide is applied to said locus after emergence of said cereal crop, optionally wherein said napropamide is applied to said locus when said cereal crop has grown to a growth stage of from BBCH_{cereal} 01 to BBCH_{cereal} 19, and preferably when said cereal crop has grown to a growth stage of from BBCH_{cereal} 01 to BBCH_{cereal} 11.

9. Use of napropamide according to any one of the preceding claims, wherein said cereal crop is planted at the locus at a depth of at least 1 cm, optionally wherein said cereal crop is planted at the locus at a depth of at least 2 cm.

10. Use of napropamide according to any one of the preceding claims, wherein said napropamide is applied in an amount corresponding to about 10 g/Ha to about 1 kg/Ha D-napropamide, optionally wherein said napropamide is applied in an amount corresponding to about 400 g/Ha to about 700 g/Ha D-napropamide.

11. Use of napropamide according to any one of the preceding claims, wherein said napropamide is comprised in a herbicide composition further comprising at least one agronomically acceptable excipient, diluent, adjuvant and/or safener; and/or wherein said napropamide is comprised in a herbicide composition further comprising an additional active agent, wherein preferably said additional active agent is selected from ethofumesate, flufenacet and/or pendimethalin.

12. A method of selectively controlling a weed at a locus for growing a cereal crop, said method comprising application of napropamide to the locus, wherein a cereal crop is present at the locus or is planted at the locus after application of said napropamide to the locus.

13. A method according to claim 12, wherein:
- said weed is as defined in any one of claims 2 to 4; and/or
- said cereal is as defined in claim 5 or 9; and/or
- said napropamide is as defined in claim 6 or 11; and/or
- said application is as defined in claim 7, 8 or 10.

14. A locus for growing a cereal crop, wherein a weed and a cereal crop are both present at the locus and the locus has a herbicide for selective control of the weed applied thereto, wherein said herbicide consists of or comprises napropamide, optionally wherein:
- said weed is as defined in any one of claims 2 to 4; and/or
- said cereal is as defined in claim 5 or 9; and/or
- said napropamide is as defined in claim 6 or 11; and/or
- said herbicide is applied to said locus as defined in any of claims 7, 8 and 10.

15. A kit, comprising:
i) a first component, wherein the first component comprises napropamide; and
ii) a second component comprising an agrochemically acceptable excipient, diluent, adjuvant and/or safener;
and optionally further comprising:
iii) a third component comprising an additional active agent; and/or
iv) instructions for use;
optionally wherein the kit further comprises:
a) a third component comprising a additional active agent is present and said first component and said third component are packaged separately, wherein preferably first component and said third component are provided in a form suitable for tank mixing prior to administration to a locus; or
b) a third component comprising a additional active agent is present and said first component and said third component are formulated together; wherein preferably first component and said third component are provided in a form suitable for tank mixing with said second component prior to administration to a locus;
and/or wherein:
- said napropamide is D-napropamide; and/or
- said additional active agent is selected from ethofumesate, flufenacet and/or pendimethalin..
